# EUROPEAN PATENT APPLICATION

(11) **EP 2 778 864 A1**
(43) Date of publication of application: **17.09.2014**
(21) Application number: 13159130.7
(22) Date of filing: 14.03.2013
(51) Int. Cl.: G06F 3/0354, G06K 9/22

(54) **Method and apparatus pertaining to the display of a stylus-based control-input area**

(71) Applicant: BlackBerry Limited, Waterloo, ON N2K 0A7 (CA)
(72) Inventor: LEWIN, Mathias, Malmö 21140 (SE)
(74) Representative: Noble, Nicholas

(57) **Abstract**

An apparatus detects a user's non-stylus-based gestures with respect to a display while the apparatus is engaged in a stylus-based electronic ink input mode of operation and responsively presents, via the display, a stylus-based control-input area. By one approach this stylus-based control-input area presents at least one stylus-selectable control input that pertains to a setting for the stylus-based electronic ink mode of operation.

## Description

### Field of Technology

The present disclosure relates to styli employed as a user interface to a corresponding electronic device.

### Background

Various styli are known and typically serve in conjunction with a scribing surface that is configured to work with a corresponding stylus. Generally speaking, a stylus is typically a hand-held writing utensil that often (but not exclusively) has a pencil-like elongated form factor and that includes at least one pointed end configured to interact with the scribing surface. Using a stylus as an input mechanism with, for example, a display offers a variety of advantages over a fingertip including the opportunity for increased precision as well as an expression modality that accords with the user's own past experience with a pencil or pen.

It is known in the art to allow the user to access a "settings" capability or the like (typically via a menu-based user interface) to set their electronic device to react in desired ways to stylus input. The number and type of stylus-input user settings that a given electronic device can accommodate varies from one device to another. Examples of settings include but are not limited to settings regarding electronic ink line thickness, line texture, line color, line transparency, and so forth.

Unfortunately, many stylus-based electronic devices are relatively small with modern smartphones being one illustrative example. Accordingly, the size of the display/scribing surface is similarly relatively small. As a result, providing the user with ready access to their stylus-settings controls typically either consumes display space during a stylus-based electronic ink input mode of operation and thereby further reduces the scribing and display area available to the user or requires a moderately (or significantly) complicated series of user actions to leave a stylus-based electronic ink input mode of operation and thereby access those stylus settings.

### Brief Description of the Drawings

FIG. 1 is a flow diagram in accordance with the disclosure.

FIG. 2 is a block diagram in accordance with the disclosure.

FIG. 3 is a block diagram in accordance with the disclosure.

FIG. 4 is a perspective view in accordance with the disclosure.

FIG. 5 is a top plan view in accordance with the disclosure.

FIG. 6 is a top plan view in accordance with the disclosure.

FIG. 7 is a top plan view in accordance with the disclosure.

FIG. 8 is a top plan view in accordance with the disclosure.

### Detailed Description

The following describes an apparatus and method pertaining to detecting a user's non-stylus-based gestures with respect to a display while the apparatus is engaged in a stylus-based electronic ink input mode of operation and responsively presenting, via the display, a stylus-based control-input area. By one approach this stylus-based control-input area presents at least one stylus-selectable control input that pertains to a setting for the stylus-based electronic ink mode of operation.

These teachings are highly flexible in practice and will accommodate, for example, a wide variety of user gestures in these regards. As one example in these regards the operative gesture comprises an unpinch gesture.

By one approach the aforementioned stylus-based control-input area comprises a window that (only partially, if desired) overlies an electronic-ink input area. If desired, the location and/or relative size of the stylus-based control-input area can depend, at least in part, on a location and/or size of the operative user gesture. In lieu of the foregoing or in combination therewith the persistence of the stylus-based control-area can track the persistence of the operative user gesture.

So configured (and if desired), the complete display area of the electronic device can serve as an electronic-ink input area during a stylus-based electronic ink mode of operation. The user can, when and as desired, immediately reveal available stylus-input settings with a simple non-stylus gesture. By one approach the user can then employ the stylus to make selections from amongst the displayed settings. The stylus-based control-input area can then be just as easily closed to thereby return the display fully to the presentation of the user's rendered electronic ink.

These teachings are economically practiced and are easily scaled to suit a wide variety and number of styli, stylus-detection/tracking methodologies, applications, stylus settings, and display sizes.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

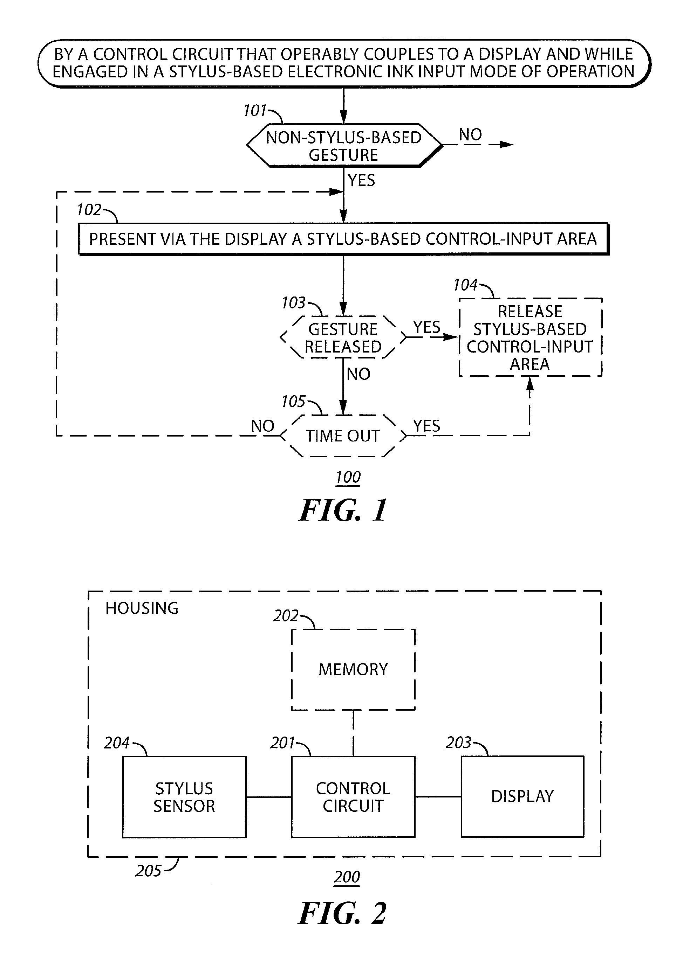

FIG. 1 presents an illustrative example of a process 100 that accords with many of these teachings. In many useful application settings a control circuit of choice carries out the process 100. Referring momentarily to FIG. 2, such a control circuit 201 can comprise a part of an electronic device such as a portable electronic device 200. Examples in these regards include but are certainly not limited to so-called smartphones and tablet/pad-based computers.

Such a control circuit 201 can comprise a fixed-purpose hard-wired platform or can comprise a partially or wholly programmable platform. These architectural options are well known and understood in the art and require no further description here. This control circuit 201 is configured (for example, by using corresponding programming as will be well understood by those skilled in the art) to carry out one or more of the steps, actions, and/or functions described herein.

If desired the control circuit 201 operably couples to an optional memory 202. The memory 202 may be integral to the control circuit 201 or can be physically discrete (in whole or in part) from the control circuit 201 as desired. This memory 202 can serve, for example, to non-transitorily store the computer instructions that, when executed by the control circuit 201, cause the control circuit 201 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

In this illustrative example the control circuit 201 also operably couples to a display 203 and a stylus sensor 204. The present teachings will readily accommodate using a display that can double as stylus sensor 204 but such a configuration is a not a requirement. Numerous technologies are known in the art to determine and track a stylus's location and movement with respect to a scribing surface such as a display. As the present teachings are not overly sensitive to any particular choices in these regards, further elaboration will not be provided here for the sake of brevity and clarity.

For the sake of an illustrative example it will be presumed here that the foregoing components are disposed within (or on) a corresponding housing 205. In fact, however, a housing is not a requirement for the present teachings.

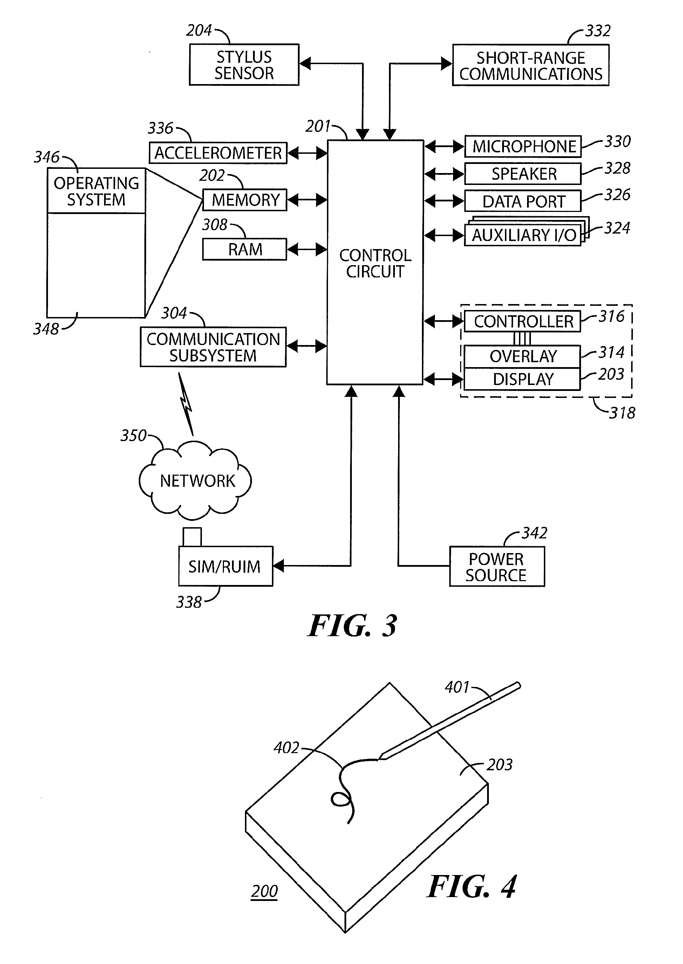

By way of a further illustrative example in these regards (but again without intending any specific limitations by way of the specificity of this example), FIG. 3 presents a portable electronic device 200 that includes the aforementioned control circuit 201 which is configured to control the overall operation of the portable electronic device 200. In this particular illustrative example the portable electronic device 200 comprises a portable communications device. Corresponding communication functions, including data and voice communications, are performed through a communication subsystem 304. The communication subsystem receives messages from and sends messages to a wireless network 350.

The wireless network 350 may be any type of wireless network, including, but not limited to, a wireless data networks, a wireless voice network, or a network that supports both voice and data communications. The control circuit 201 may also operably couple to a short-range communication subsystem 332 (such as an 802.11 or 802.16-compatible transceiver and/or a Bluetooth™-compatible transceiver). To identify a subscriber for network access, the portable electronic device 200 may utilize a Subscriber Identity Module or a Removable User Identity Module (SIM/RUIM) card 338 for communication with a network, such as the wireless network 350. Alternatively, user identification information may be programmed into the aforementioned memory 202.

A power source 342, such as one or more rechargeable batteries or a port to an external power supply, powers the electronic device. The control circuit 201 may interact with an accelerometer 336 that may be utilized to detect direction of gravitational forces or gravity-induced reaction forces. The control circuit 201 also interacts with a variety of other components, such as a Random Access Memory (RAM) 308, an auxiliary input/output (I/O) subsystem 324, a data port 326, a speaker 328, a microphone 330, and the aforementioned stylus sensor 204.

The display 203 can be disposed in conjunction with a touch-sensitive overlay 314 that operably couples to an electronic controller 316. Together these components can comprise a touch-sensitive display 318 that serves as a graphical-user interface. Information, such as text, characters, symbols, images, icons, and other items may be displayed on the touch-sensitive display 318 via the control circuit 201.

The touch-sensitive display 318 may employ any of a variety of corresponding technologies including but not limited to capacitive, resistive, infrared, surface acoustic wave (SAW), strain gauge, optical imaging, dispersive signal technology, and/or acoustic pulse recognition-based touch-sensing approaches as are known in the art. If the touch-sensitive display 318 should utilize a capacitive approach, for example, the touch-sensitive overlay 314 can comprise a capacitive touch-sensitive overlay 314. In such a case the overlay 314 may be an assembly of multiple stacked layers including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

One or more touches, also known as touch contacts or touch events, may be detected by the touch-sensitive display 318. The control circuit 201 may determine attributes of the touch, including a location of a touch. Touch location data may include data for an area of contact or data for a single point of contact, such as a point at or near a center of the area of contact. Generally speaking, a swipe is a touch that begins at one location on the touch-sensitive display 318 and ends at another location (as when the user places their fingertip on the touch-sensitive display 318 and then drags their fingertip along the surface of the touch-sensitive display 318 before finally lifting their fingertip from that surface).

The portable electronic device 200 includes an operating system 346 and software programs, applications, or components 348 that are executed by the control circuit 201 and are typically stored in a persistent, updatable store such as the memory 202. Additional applications or programs may be loaded onto the portable electronic device 200 through the wireless network 350, the auxiliary I/O subsystem 324, the data port 326, or the short-range communications subsystem 332.

Such a portable electronic device 200 can be readily configured to practice, and benefit from, the present teachings.

Referring again to FIG. 1, as mentioned above this process 100 can be carried out by a control circuit 201 that operably couples to a display 203. This example also presumes that, at least initially, the control circuit 201 is engaged in a stylus-based electronic ink input mode of operation. FIG. 4 presents a simple example in these regards. In this example, while in the stylus-based electronic ink input mode of operation the entire display 203 serves as an electronic ink input and display surface. For the sake of an example the user has scribed a simple line-based design 402 using a stylus 401. (As used herein, it will be understood that this reference to a stylus-based electronic ink input mode of operation refers to a mode of operation during which the user wields the stylus 401 to create corresponding electronic ink lines and other rendered objects as versus, for example, tapping on and thereby selecting menu offerings or the like.)

Referring again to FIG. 1, at 101 the control circuit 201 monitors to detect a predetermined user's non-stylus-based gesture with respect to the display 203. Being "non-stylus-based," this gesture is accomplished without the stylus 401. Instead, and by way of example, the gesture can comprise a finger or fingers-based gesture.

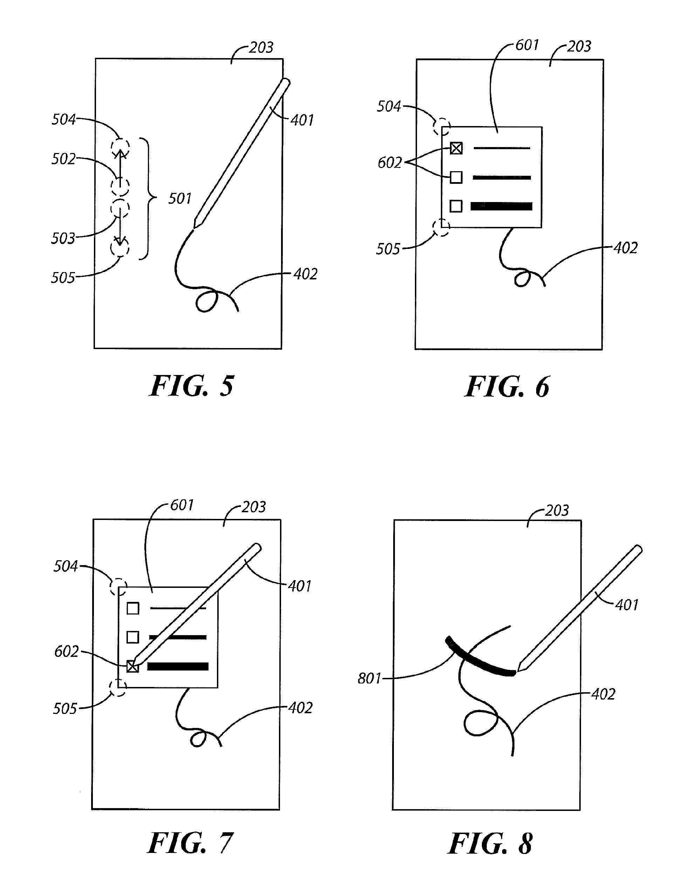

By one approach, and as illustrated in FIG. 5, the operative gesture 501 can comprise an unpinch gesture. Accordingly, the gesture 501 can begin with two of the user's fingertips being closely and simultaneously located near one another while touching the display 203 (as represented by the circular locations denoted by reference numerals 502 and 503) and then sliding the two fingertips away from one another on the display. The extent of the completed gesture 501 spans the ending points of the user's fingertips on the display 203 (as represented by the circular locations denoted by reference numerals 504 and 505).

By one approach it may be required that the user effect this gesture 501 within a certain portion of the display 203 (such as, for example, the left side of the display 203, the right side of the display 203, the top half of the display 203, and so forth). By another approach the user may be permitted to effect this gesture 501 anywhere within the display 203. In the latter case, then, it may be permitted that the user effect this gesture 501 such that the gesture 501 overlies, in whole or in part, previously rendered electronic ink 402.

It will also be appreciated that any of a wide variety of single-finger and multiple-finger gestures can serve in lieu of the unpinch gesture. By one approach, for example, a simple one-finger downward or upward swipe could suffice. As another example a circle scribed with a single finger could serve as the operative gesture.

In the absence of detecting the predetermined gesture at 101, this process 100 can accommodate any of a variety of responses. Examples of responses can include temporal multitasking (pursuant to which the portable electronic device 200 conducts other tasks before returning to again monitor for the operative gesture) as well as continually looping back to essentially continuously monitor for the operative gesture. These teachings also accommodate supporting this detection activity via a real-time interrupt capability if desired.

Referring to FIG. 1, and presuming detection of the non-stylus-based gesture, the control circuit 201 at 101 presents (via the display 203) a stylus-based control-input area. FIG. 6 presents one illustrative example in these regards.

In FIG. 6 the stylus-based control-input area 601 comprises a window that overlies the electronic-ink input area (including, in this example, even part of the rendered electronic ink 402). This stylus-based control-input area 601 presents a number of stylus-selectable control inputs (in this example, checkboxes 602) that each correspond to a selectable setting for use during the stylus-based electronic ink input mode of operation.

In this particular relatively simple example, three such settings are available; a thin electronic ink line, a normal electronic ink line, and a thick electronic ink line. When opened, the stylus-based control-input area 601 shows the presently-selected electronic-ink line thickness by presenting an "X" in the checkbox 602 for that line thickness selection. It will be understood that only these three settings are shown here for the sake of clarity and simplicity. In fact, these teachings will accommodate a wide variety and number of settings as may be desired to suit the needs of a given application setting.

As noted, this stylus-based control-input area 601 comprises a window that overlies the electronic-ink input area. If desired, and as shown, this window only partially overlies the electronic-ink input area and hence a portion of the latter remains visible. These teachings will also accommodate, however, utilizing the entire available display 203 as the stylus-based control-input area if desired.

By one approach the location and/or size of the stylus-based control-input area 601 can depend, at least in part, upon the location and/or size of the triggering gesture 501. In this particular illustrative example, the left-side corners of the stylus-based control-input area 601 correspond to the outer extremities 504 and 505 of the gesture 501 as described in FIG. 5. Had the user opted for a gesture 501 having a longer length, the stylus-based control-input area 601, too, would be larger. Or, had the user opted to locate the gesture at a different portion of the display 203, the stylus-based control-input area 601 would be similarly located. If desired, the stylus-based control-input area 601 can have at least a minimum size should the user's triggering gesture be particularly small.

If desired, the control circuit 201 can be configured to accommodate a variety of approaches in these regards. For example, if a left-handed user employed their right hand to effect this gesture on the right side of the display 203, the corresponding stylus-based control-input area 601 could have the locations of the upper and lower right-side corners defined by the user's gesture rather than the left-side corners as in the illustrated example.

Referring to FIG. 7, in this example the user employs the stylus 401 to tap on the checkbox 602 for the thickest electronic ink line setting. This stylus-based tap selects that particular line thickness for subsequent use and thereby switches the line thickness setting from the previous thin-line setting.

So configured, a user can readily and easily have access to stylus settings even while using the device 200 in a stylus-based electronic ink input mode of operation. This ease of access, in turn, can greatly improve the user's productivity as regards use of this particular input modality. This ease of access can also help encourage the user to make use of different settings to thereby enhance the aesthetic results of their scribing.

These teachings will accommodate a variety of ways to close the aforementioned stylus-based control-input area 601 and return the device 200 to the stylus-based electronic ink input mode of operation. Referring to FIG. 1, by one approach the control circuit 201 detects, at 103, that the user has released the triggering gesture. In the present example this release would comprise the user lifting one or both of their fingers from the display 203 (for at least some predetermined period of time, if desired). The control circuit 201 then responsively, at 104, releases and hence closes the stylus-based control-input area 601 and returns the device 200 and display 203 back to the stylus-based electronic ink input mode of operation. So configured, the control circuit 201 effectively displays the stylus-based control-input area 601 for a period of time that corresponds to the duration of the non-stylus-based gesture itself.

As another example, in lieu of the foregoing or in combination therewith, at 105 the control circuit 201 can simply determine whether a timeout timer (or the like, such as a countdown count) has timed out. When true, the control circuit 201 can again proceed to automatically close the stylus-based control-input area 601 as provided at 104.

Upon closing the stylus-based control-input area 601, the control circuit 201 resumes the stylus-based electronic ink input mode of operation. Now, however, as shown in FIG. 8, an electronic ink line 801 scribed with the stylus 401 will be rendered using the thick line setting that the user selected in FIG. 7. This line-thickness setting will continue, in this example, until the user makes a new selection (or until the control circuit 201 automatically returns the settings to some set of default values, if desired).

These teachings employ a highly intuitive and simple approach that a user can master with very little training. Notwithstanding the simplicity of these teachings, however, the user now has the full benefit, if desired, of the entire display 203 when applying electronic ink to the device 200 while still retaining virtually immediate and convenient access to the opportunity to modify any of a variety of stylus settings.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a display (203);
a stylus sensor (204);
a control circuit (201) operably coupled to the display and the stylus sensor and configured to, while engaged in a stylus-based electronic ink input mode of operation:
- detect (101) a user's non-stylus-based gesture (501) with respect to the display;
- present (102) via the display a stylus-based control-input area (601).

2. The apparatus of claim 1 wherein the control circuit is configured to present the stylus-based control-input area as a window that overlies an electronic-ink input area.

3. The apparatus of claim 2 wherein the control circuit is configured to present the window as only partially overlying the electronic-ink input area.

4. The apparatus of claim 1 wherein the control circuit is configured to present the stylus-based control-input area by presenting the stylus-based control-input area in a part of the display that corresponds to the non-stylus-based gesture.

5. The apparatus of claim 1 wherein the control circuit is configured to present the stylus-based control-input area by presenting the stylus-based control-input area having a size that corresponds to the non-stylus-based gesture.

6. The apparatus of claim 1 wherein the control circuit is configured to present the stylus-based control-input area only for a period of time that corresponds to a duration of the non-stylus-based gesture.

7. The apparatus of claim 1 wherein the non-stylus-based gesture comprises an unpinch gesture.

8. The apparatus of claim 1 wherein the control circuit is configured to present the stylus-based control-input area by presenting a stylus-based control-input area having at least one stylus-selectable control input (602) pertaining to a setting for the stylus-based electronic ink input mode of operation.

9. A method comprising:
at a control circuit (201) that operably couples to a display (203) and while engaged in a stylus-based electronic ink input mode of operation:
detecting (101) a user's non-stylus-based gesture (501) with respect to the display;
presenting (102) via the display a stylus-based control-input area (601).

10. The method of claim 9 wherein the stylus-based control-input area comprises a window that overlies an electronic-ink input area.

11. The method of claim 10 wherein the window only partially overlies the electronic-ink input area.

12. The method of claim 9 wherein the stylus-based control-input area is presented in a part of the display that corresponds to the non-stylus-based gesture.

13. The method of claim 9 wherein the stylus-based control-input area has a size that corresponds to the non-stylus-based gesture.

14. The method of claim 9 wherein presenting the stylus-based control-input area comprises only presenting the stylus-based control-input area for a period of time that corresponds to a duration of the non-stylus-based gesture.

15. The method of claim 9 wherein the non-stylus-based gesture comprises an unpinch gesture.
